**Europäisches Patentamt**

**European Patent Office**

**Office européen des brevets**

(19)

(11) Veröffentlichungsnummer : **0 321 395 B1**

(12) # EUROPÄISCHE PATENTSCHRIFT

(45) Veröffentlichungstag der Patentschrift :
**08.07.92 Patentblatt 92/28**

(51) Int. Cl.⁵ : **B23B 31/02, B23B 51/04**

(21) Anmeldenummer : **88810804.0**

(22) Anmeldetag : **23.11.88**

(54) **Kupplungseinrichtung für Hohlfräser zur Beton- und Gesteinsbearbeitung.**

(30) Priorität : **05.12.87 CH 4748/87**

(43) Veröffentlichungstag der Anmeldung :
**21.06.89 Patentblatt 89/25**

(45) Bekanntmachung des Hinweises auf die
Patenterteilung :
**08.07.92 Patentblatt 92/28**

(84) Benannte Vertragsstaaten :
**CH DE FR GB IT LI SE**

(56) Entgegenhaltungen :
**US-A- 3 524 663**
**US-A- 4 487 271**

(73) Patentinhaber : **HYDROSTRESS AG**
**Witzbergstrasse**
**CH-8330 Pfäffikon (CH)**

(72) Erfinder : **Bieri, Hans**
**Witzbergstrasse**
**CH-8330 Pfäffikon (CH)**

(74) Vertreter : **Bosshard, Ernst**
**Schulhausstrasse 12**
**CH-8002 Zürich (CH)**

**Beschreibung**

Die Erfindung bezieht sich auf eine Kupplungseinrichtung zur Verbindung eines drehenden Antriebsaggregates mit einem Hohlfräser zur Beton- und Gesteinsbearbeitung nach dem Oberbegriff des Patentanspruches 1.

Bei Hohlfräsern mit relativ grossem Durchmesser (bis etwa 500 mm) und entsprechend grosser Antriebsleistung (zum Beispiel etwa 10 KW) zur Herstellung kreisförmiger Oeffnungen in Betonwänden od.dgl. besteht ein Problem darin, dass sich Gewindeverbindungen zwischen Antriebsaggregat und Hohlfräser durch die Uebertragung des hohen Drehmomentes so stark verklemmen, dass sich eine solche Gewindeverbindung beim Auswechseln des Hohlfräsers nur äusserst schwer lösen lässt. Bei den zum Lösen erforderlichen Kräften kann leicht eine Deformierung des üblicherweise relativ dünnwandigen Mantels des vorn mit Diamanteinsätzen versehenen Hohlfräsers entstehen, wodurch der Fräser unbrauchbar wird. Ausserdem ist ein solcher Fräserwechsel mit ineinander verklemmten Teilen zeitraubend und mühsam und auf Baustellen sind oftmals die geeigneten Werkzeuge und Hilfsmittel zum Lösen der Verklemmung nicht vorhanden.

Erschwerend kommt die Forderung hinzu, dass sich die beiden Kupplungsteile vom getrennten Zustand ausgehend leicht und rasch zusammenfügen lassen müssen, wobei zu berücksichtigen ist, dass beide Kupplungsteile an z.T. schweren Maschinenteilen starr befestigt sind und ein umständlicher Suchvorgang der winkelmässig und axial ineinandergreifenden Position nicht zumutbar ist.

Aus der US-A 3524663 ist eine für Holzbearbeitungswerkzeuge bestimmte Kupplung bekannt, bei der ein mit einem Hohlfräser zu verbindendes erstes Kupplungsstück axial vorstehende Zähne hat, die in Nuten eines Gegenstückes eingreifen. Das erste Kupplungsstück umgibt das Gegenstück mit einem zentrierenden Rohrteil, an dessen oberem Ende sich ein Innengewinde befindet. In dieses Innengewinde greift ein Gewindezapfen ein, der gegen eine Schulter des Gegenstückes angedrückt werden kann, wenn sich Zähne und Nut im Eingriff befinden. Diese Bauart bedingt eine grosse radiale und axiale Ausladung, ist in der Herstellung aufwendig und eignet sich nicht zur Durchführung von Kühlflüssigkeit.

Die mit der Erfindung zu lösende Aufgabe besteht darin, eine Kupplungseinrichtung zwischen einem Hohlfräser und dessen motorisch drehbarer Antriebsgruppe der im Oberbegriff genannten Art derart weiterzuentwickeln, dass sich eine sowohl axial als auch radial gedrängte Bauart ergibt, die sich zur Uebertragung hoher Drehmomente eignet, sich maschinell seriemässig leicht herstellen lässt und zur dichten Durchführung von Kühlflüssigkeit geeignet ist.

Gemäß der Erfindung wird diese Aufgabe bei einer Kupplungseinrichtung der eingangs genannten Art dadurch gelöst, dass beide Kupplungsteile einstükkig ausgebildet sind und durch eine in ein Aussengewinde des zweiten Kupplungsteiles eingreifende Ueberwurfmutter im ineinandergreifenden Zustand gehalten sind, wobei die Ueberwurfmutter gegen eine sich an die zylindrische Aussenfläche des ersten Kupplungsteiles anschliessende Ringschulter anliegt, das zweite Kupplungsteil einen von der Kreisform abweichenden, Schenkel enthaltenden Kupplungsansatz aufweist, wobei die Schenkel von einem zentralen Mittelteil radial abragen, im ersten Kupplungsteil eine zur axialen Zentrierung vorgesehene, der Kupplungs-Ausnehmung vorgelagerte, kreisförmige Vertiefung vorhanden ist, zur Aufnahme des vorstehenden Kupplungsansatzes des zweiten Kupplungsteiles vor dem Kupplungseingriff, die beiden Kupplungsteile je eine zentrale Durchgangsbohrung für Kühlflüssigkeit enthalten und im zweiten Kupplungsteil eine die Durchgangsbohrung umgebende, die Stirnfläche leicht überragende Ringdichtung vorhanden ist.

Die erfindungsgemässe Kupplungseinrichtung ist zur Uebertragung hoher Drehmomente geeignet, da die vom zentralen Mittelteil radial abragenden Schenkel für die Kraftübertragung sich kräftig dimensionieren lassen und sich eine besonders gedrängte Bauart ergibt. Die gedrungene axiale Ausbildung ermöglicht einen extrem kurzen axialen Weg zum Trennen der beiden Kupplungsteile bei einem Wechsel des Werkzeugs, was im Hinblick auf den durch die Antriebs- und Maschinen-Konstruktion bedingte beschränkte axiale Verstellmöglichkeit die mögliche Bohrtiefe beeinflusst. Die axiale Ausrichtung der beiden Kupplungsteile vor dem Kupplungseingriff erfolgt durch die der Kupplungsausnehmung vorgelagerte kreisförmige Vertiefung, ohne die das Auffinden der winkelmässig übereinstimmenden Lage sehr umständlich wäre.

Durch eine die Kühlbohrung umgebende Ringdichtung wird eine wasserdichte Verbindung zwischen den beiden Kupplungsteilen erreicht, ohne dessen Trennbarkeit zu behindern. Zugleich bewirkt die über die Stirnfläche leicht vorstehende Ringdichtung eine Sicherung gegen ein Lösen unter der Wirkung von Vibrationen.

In der Zeichnung ist ein Ausführungsbeispiel des Erfindungsgegenstandes dargestellt. Es zeigen:

Fig. 1 eine Draufsicht auf den oberen, mit dem Antriebsaggregat zu verbindenden Kupplungsteil

Fig. 2 eine Seitenansicht des oberen Kupplungsteiles

Fig. 3 eine Seitenansicht des unteren Kupplungsteiles

Fig. 4 eine Draufsicht auf den unteren Kupplungsteil

Fig. 5 einen Querschnitt durch die Ueberwurfmutter

Fig. 6 eine Ansicht, teilweise im Schnitt, durch die zusammengefügte Kupplung samt Antriebsaggregat und Hohlfräser.

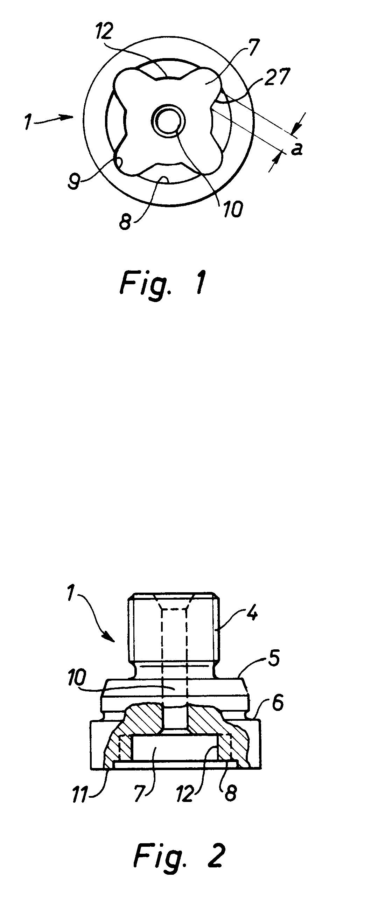

Die Kupplung dient zur lösbaren Verbindung eines Hohlfräsers 14 für die Beton- und Gesteinsbearbeitung mit einem drehenden Antriebsaggregat 13. Ein oberes, erstes Kupplungsstück 1 enthält gemäss den Fig. 1 und 2 einen Gewindezapfen 4, der dazu bestimmt ist in die Spindel 28 eines vorzugsweise hydraulischen Antriebsaggregates 13 eingeschraubt zu werden, bis seine Schulter 5 gegen die Stirnfläche der Spindel 28 anliegt. Am unteren Ende dieses ersten Kupplungsteiles 1 ist eine von der Kreisform abweichende Ausnehmung 7 vorhanden, deren Kontur aus Fig. 1 ersichtlich ist. Diese Kontur ist zur Aufnahme eines etwa kreuzförmigen Gegenstückes eines zweiten, unteren Kupplungsstückes 2 bestimmt. Die Kontur dieser Ausnehmung 7 setzt sich im wesentlichen aus einer Kreisvertiefung 12 und vier diese radial überragenden, halbkreisförmigen Vertiefungen 9 zusammen. Dabei bilden die Uebergangszonen je die eigentlichen Berührungsflächen a und somit die anliegenden Teile 27 mit den Seitenflächen 22 für den Ansatz 20 des Gegenstückes 2.

Ausgehend von der unteren Stirnfläche 11 befindet sich im Kupplungsteil 1 koaxial zur Längsachse (Drehachse) eine kreisförmige Zentriervertiefung 8, deren Tiefe wesentlich geringer ist als diejenige der Ausnehmung 7. Ferner ist in diesem Kupplungsteil 1 eine zentrale axiale Durchgangsbohrung 10 vorhanden zur Zufuhr von Kühlflüssigkeit, vorzugsweise Wasser, für den Hohlfräser 14.

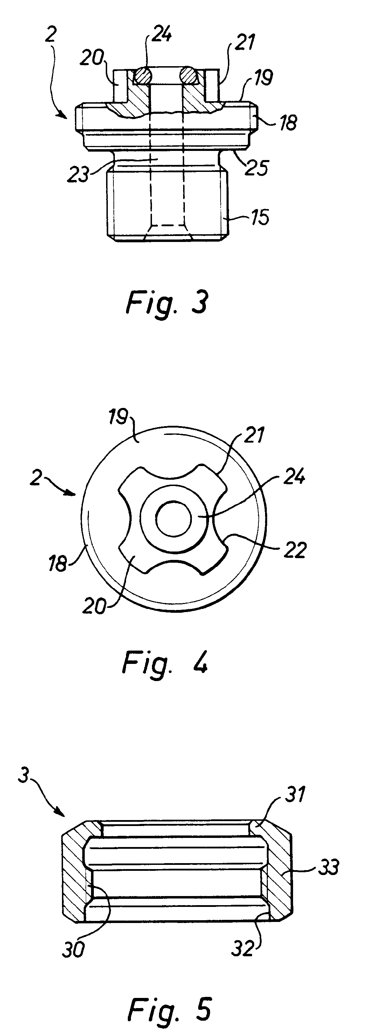

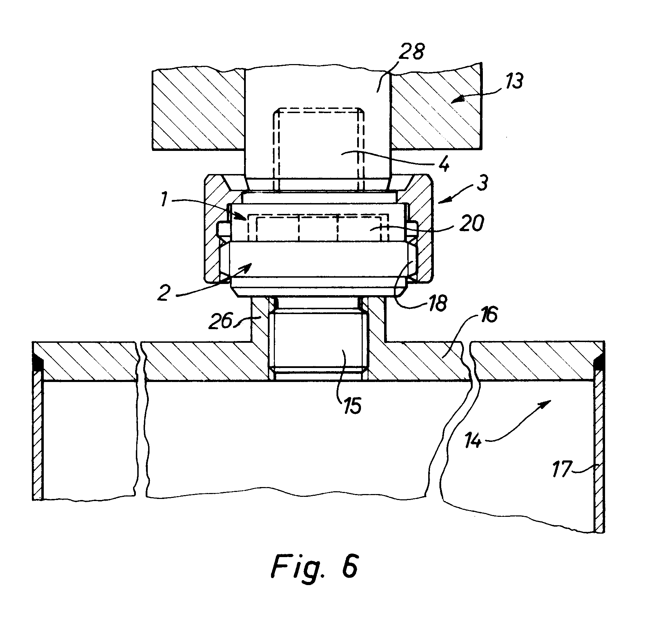

Ein zweiter, unterer Kupplungsteil 2 ist zur Verbindung mit einem Hohlfräser 14 bestimmt. Ein mit einem Aussengewinde versehener Zapfen 15 wird in einen Fräserflansch 16 (Fig.6) eingeschraubt, bis seine Schulter 25 an der Stirnfläche des Kragens 26 des Fräserflansches 16 anliegt. Der darüber liegende Bereich enthält aussen ein Kurzgewinde 18 mit beispielsweise etwa drei Gewindegängen. Der anschliessende Bereich enthält den Kupplungsansatz 20, der in die komplementäre Ausnehmung 7 des ersten Kupplungsteiles 1 einzugreifen bestimmt ist. Dieser Kupplungsansatz 20 ist im wesentlichen als Kreuz 20 ausgebildet, dessen vier Schenkel aussen auf einem kreisförmigen Zylindermantel 21 (Fig. 4) liegen. Der sich je zwischen den Kreuzschenkeln befindliche Bereich 22 ist gerundet und je Teil eines Kreises. Der Durchmesser des Umfangskreises 21 der Kreuzschenkel 20 ist um ein geringes Mass kleiner als der Durchmesser der Zentriervertiefung 8 im ersten Kupplungsteil 1. Dadurch wird das Zentrieren der beiden Kupplungsteile 1,2 erleichtert.

Das Zusammenfügen der beiden Teile erfolgt in der Weise, dass die beiden Kupplungsteile vorerst in beliebiger gegenseitiger Drehlage in der Vertiefung 8 zentrierend eingesetzt werden. Hernach wird der eine relativ zum anderen Kupplungsteil 1,2 so lange verdreht, bis sich das Kreuz 20 in winkelmässig übereinstimmender Lage mit der komplementären Ausnehmung 7 befindet und die beiden Teile dann durch axiale praktisch spielfrei Bewegung ineinander einrasten. Im ineinandergefügten Zustand liegen die Kreuzschenkel-Seitenflächen 22 gegen die mit a bezeichneten Bereiche des ersten Kupplungsteiles 1 an und bewirken eine kraftschlüssige Verbindung. Die Seitenflächen 22 der Kreuzschenkel 20 verlaufen rechtwinklig zur Fläche 19, also in Axialrichtung des Kupplungsteiles 2, ebenso die Wandung der Ausnehmung 7 mit den Bereichen a. Im Zentrum des Kupplungsteiles 2 befindet sich eine Durchgangsbohrung 23, an deren oberem Ende ein Dichtungsring 24 eingesetzt ist, der die obere Stirnseite im nicht zusammengebauten Zustand leicht überragt.

Die beiden Kupplungsteile 1,2 werden somit durch reine Axialbewegungen zusammengefügt und voneinander getrennt. Die Ueberwurfmutter 3 dient lediglich dazu, die beiden Kupplungsteile 1,2 im zusammengefügten Zustand festzuhalten, ohne dass sie an der Uebertragung des Drehmomentes teilnimmt. Beim Aufschrauben der Ueberwurfmutter 3 auf das Kurzgewinde 18 gelangt die nach innen vorstehende Ringfläche 31 zum Anliegen gegen die Schulter 5, wodurch die beiden Kupplungsteile 1,2 gegeneinander gezogen werden bis die beiden Flächen 19 und 11 zum Anliegen gelangen.

Diese Schnellkupplung, bei der die Ueberwurfmutter 3 mit einer polygonalen Aussenfläche, vorzugsweise in Form eines Sechskantes, versehen ist, lässt sich auch nach der Uebertragung grosser Drehmomente leicht lösen. Zum Lösen der Kupplung wird die Ueberwurfmutter 3 nach oben geschraubt, bis das Kurzgewinde 18 ausser Eingriff mit dem Gewinde 18 gelangt. Hernach lässt sich der untere Kupplungsteil 2 samt dem Hohlfräser 14 durch eine Axialbewegung nach unten aus dem oberen Kupplungsteil 1 herausziehen. Die beiden Kupplungsteile 1,2 können sich somit an ihren axial, bzw. vertikal verlaufenden kraftübertragenden Berührungsflächen nicht verklemmen, weshalb ein Wechsel von Hohlfräsern einfach und rasch durchführbar ist. Zudem lassen sich die beiden Kupplungsteile 1, 2 durch CNC-Maschinen leicht herstellen.

Am unteren Ende des Mantel 17 des Hohlfräsers 14 befinden sich üblicherweise angelötete, mit Diamanten besetzte Schneideinsätze. Der Durchmesser dieser Hohlfräser 14 kann bis etwa 500 mm betragen.

An Stelle eines Gewindezapfens 15 könnte auch ein Ringflansch vorhanden sein, der durch mehrere axiale Schrauben mit dem Fräserflansch 16 starr verschraubt ist.

Es wäre auch möglich, dass der mit einem vorstehenden Kreuz 20 versehene Kupplungsteil oben und der mit der Ausnehmung 7 versehene Kupplungsteil unten angeordnet würde.

An Stelle einer zentrierenden Vertiefung 8 könnte im einen Kupplungsteil 1 oder 2 in dessen Durchgangsbohrung 10,23 ein vorstehender Zentrierstift satt eingesetzt werden, der lose in die Durchgangsbohrung des

EP 0 321 395 B1

anderen Kupplungsteiles eingreift. Zur Durchleitung des Kühlwassers müssten in diesem Zentrierstift Längsnuten angebracht werden oder er ist als Röhrchen auszubilden.

Ausser einer Kreuzform könnten die ineinandergreifenden Kupplungsteile auch eine andere, nur durch Axialbewegung ineinanderfügbare und voneinander trennbare, insbesondere polygonale Gestalt haben.

## Patentansprüche

1. Kupplungseinrichtung zur Verbindung eines motorisch angetriebenen, drehenden Antriebsaggregates mit einem Hohlfräser (14) zur Beton- und Gesteinsbearbeitung, mit einem ersten zur Verbindung mit dem Antriebsaggregat (13) bestimmten Kupplungsteil (1) und einem zweiten zur Verbindung mit dem Hohlfräser bestimmten Kupplungsteil (2), wobei das eine Kupplungsteil vorstehende Kupplungsansätze (20) aufweist und das andere Kupplungsteil im wesentlichen komplementäre Kupplungs-Ausnehmungen (7) enthält, die kraftschlüssig ineinandergreifen-und die nur durch Axialbewegung miteinander in und ausser Eingriff gelangen, die beiden Kupplungsteile (1,2) durch eine Verschraubung (3) im ineinandergreifenden Zustand gehalten sind und Zentrierorgane vorhanden sind zur Erzielung einer axial übereinstimmenden gegenseitigen Lage zwischen den Kupplungsteilen (1,2) vor dem Ineinandergreifen von Ansätzen und Ausnehmungen, dadurch gekennzeichnet, dass beide Kupplungsteile (1,2) einstückig ausgebildet sind und durch eine in ein Aussengewinde des zweiten Kupplungsteiles (2) eingreifende Ueberwurfmutter (3) im ineinandergreifenden Zustand gehalten sind, wobei die Ueberwurfmutter (3) gegen eine sich an die zylindrische Aussenfläche des ersten Kupplungsteiles (1) anschliessende Ringschulter (6) anliegt, das zweite Kupplungsteil (2) einen von der Kreisform abweichenden, Schenkel (20) enthaltenden Kupplungsansatz aufweist, wobei die Schenkel (20) von einem zentralen Mittelteil radial abragen, im ersten Kupplungsteil (1) eine zur axialen Zentrierung vorgesehene, der Kupplungs-Ausnehmung (7) vorgelagerte kreisförmige Vertiefung (8) vorhanden ist, zur Aufnahme des vorstehenden Kupplungsansatzes (20) des zweiten Kupplungsteiles (2) vor dem Kupplungseingriff, die beiden Kupplungsteile (1,2) je eine zentrale Durchgangsbohrung (10,23) für Kühlflüssigkeit enthalten und im zweiten Kupplungsteil (2) eine die Durchgangsbohrung umgebende, die Stirnfläche leicht überragende Ringdichtung (24) vorhanden ist.

2. Kupplungseinrichtung nach Anspruch 1, dadurch gekennzeichnet, dass das zweite Kupplungsteil (2) kreuzförmig angeordnete Schenkel (20) aufweist, zwischen denen sich je ein konkaver Uebergangsteil (22) befindet und im ersten Kupplungsteil (1) die Kupplungs-Ausnehmungen (7) zur Aufnahme der Schenkel (20) an ihren.radial äusseren Enden gerundet sind.

## Revendications

1. Dispositif d'accouplement pour assembler un ensemble menant (13), tournant, entraîné par moteur et une fraiseuse cylindrique (14) propre à travailler du béton et de la pierre, comprenant un premier manchon d'accouplement (1) destiné à la liaison avec l'ensemble menant (13) et un second manchon d'accouplement (2) destiné à la liaison avec la fraiseuse cylindrique, l'un des manchons d'accouplement comportant des saillies d'accouplement (20) et l'autre manchon d'accouplement étant pourvu de cavités d'accouplement (7) sensiblement complémentaires qui s'emboîtent les unes dans les autres de manière à constituer une liaison mécanique, et qui viennent en prise les unes avec les autres et se dégagent les unes des autres uniquement par déplacement axial, dans lequel les deux manchons d'accouplement (1, 2) sont maintenus par vissage (3) dans l'état où ils s'emboîtent l'un dans l'autre, et dans lequel des organes de centrage sont prévus pour obtenir une position axiale cohérente et réciproque entre les manchons d'accouplement (1, 2) avant l'emboîtement des saillies et cavités, caractérisé en ce que les deux manchons (1, 2) sont formés chacun d'une seule pièce et sont maintenus dans l'état où ils s'emboîtent l'un dans l'autre par un écrou (3) en prise avec le filetage extérieur du second manchon d'accouplement (2), en ce que l'écrou (3) est en contact avec un épaulement annulaire (6) se raccordant à la surface cylindrique extérieure du premier manchon d'accouplement (1), en ce que le second manchon d'accouplement (2) présente une saillie d'accouplement non circulaire, comportant des bras (20) s'étendant radialement à partir d'une partie centrale, en ce qu'un évidement de forme circulaire (8) destiné au centrage axial est prévu devant la cavité d'accouplement (7) du premier manchon d'accouplement (1) pour recevoir la saillie d'accouplement (20) du second manchon d'accouplement (2) avant l'engagement de l'accouplement, en ce que les deux manchons d'accouplement (1, 2) comportent chacun un trou central traversant (10, 23) destiné au liquide de refroidissement et en ce qu'un joint torique (24) entourant le trou traversant et faisant légèrement saillie sur la face frontale est prévu dans le second manchon d'accouplement (2).

2. Dispositif d'accouplement selon la revendication 1, caractérisé en ce que le second manchon d'accouplement (2) présente des bras disposés en croix (20), reliés entre eux par une partie de transition concave

**4**

(22) et en ce que les cavités d'accouplement (7) du premier manchon d'accouplement (1) destinées à recevoir les bras (20) sont arrondies à leurs extrémités périphériques.

**Claims**

1. A coupling device for connecting a motor-driven, rotating drive unit with a tubular cutter (14) for working concrete and stone, having a first coupling part (1) intended to be connected with the drive unit (13) and a second coupling part (2) intended to be connected to the tubular cutter, one coupling part comprising projecting coupling lugs (20) and the other coupling part essentially containing complementary coupling recesses (7), which mesh in a force-locking manner and which only engage and disengage with one another by an axial movement, the two coupling parts (1,2) being kept in the intermeshing state by a screw fitting (3) and centring means being provided to attain an axially coinciding mutual position between the coupling parts (1, 2) before the intermeshing of lugs and recesses, characterised in that both coupling parts (1, 2) are constructed in one piece and are kept in the intermeshing state by a union nut (3) engaging in an external thread of the second coupling part (2), the union nut (3) abutting against an annular shoulder (6) connected to the cylindrical outer surface of the first coupling part (1), the second coupling part (2) comprising a coupling lug deviating from the circular shape and containing legs (20), the legs (20) radially projecting from a central middle piece, in the first coupling part (1) there existing a circular indentation (8) provided for the axial centring operation and positioned in front of the coupling recess (7), for receiving the projecting coupling lug (20) of the second coupling part (2) before the engagement of the coupling, the two coupling parts (1, 2) each containing a central through-hole (10, 23) for cooling fluid and in the second coupling part (2) there existing an annular seal (24) surrounding the through-hole and slightly overhanging the front.

2. A coupling device according to Claim 1, characterised in that the second coupling part (2) comprises legs (20) having a cruciform arrangement, between each of which there is a concave transition piece (22) and in the first coupling part (1) the coupling recesses (7) are rounded at their radially outer ends to receive said legs (20).

Fig. 1

Fig. 2

Fig. 3

Fig. 4

Fig. 5

*Fig. 6*

EP 0 321 395 B1